# EUROPEAN PATENT APPLICATION

(11) **EP 2 523 359 A1**
(43) Date of publication of application: **14.11.2012**
(21) Application number: 10842059.7
(22) Date of filing: 21.12.2010
(51) Int. Cl.: H04B 5/02, G06K 19/07, H04M 1/02

(54) **COMMUNICATIONS TERMINAL DEVICE**

(30) Priority: 05.01.2010 JP 2010000718
(71) Applicant: Panasonic Corporation, Kadoma-shi Osaka 571-8501 (JP)
(72) Inventor: OTANI, Masao c/o Panasonic Corporation IPROC, Osaka-shi, Osaka 540-6207 (JP)
(74) Representative: Grünecker, Kinkeldey, Stockmair & Schwanhäusser
(86) International application number: PCT/JP2010/007405
(87) International publication number: WO 2011/083539

(57) **Abstract**

Disclosed is a communications terminal device capable of strengthening characteristics of antenna couplings with external communicating apparatuses, and of securing a wide area communications region. An antenna (1) is disposed upon a casing (3a) of the device, and carries out proximity communications by way of electromagnetic induction. A metallic excitation plate (2a) is disposed upon the casing (3a), and is electrically connected to the antenna (1). A battery (5) is installed within the casing (3a). A battery cover (4a) is detachably attached with respect to the casing (3a) in order to anchor the battery (5). A metallic excitation plate (2b) is disposed upon the battery cover (4a), and is electrically connected to the battery (5) and the metallic excitation plate (2a) in the state wherein the battery cover (4a) is attached upon the casing (3a).

## Description

### Technical Field

The present invention relates to a communication terminal apparatus, and more particularly to a communication terminal apparatus having both a reader/writer function and a card function for performing proximity communication using electromagnetic induction with a plurality of external communication devices,

### Background Art

In recent years, demand has grown for the development of a communication system in which communication is performed in proximity to a communicating party at the level of close or actual contact. Specifically, demand has grown for the development of a communication system in which communication is performed using an electric field or magnetic field in a proximate area of approximately 1.0 cm or less in which an electric field or magnetic field operates. Such a communication system is used, for example, when copying electronic data in which telephone directory or suchlike personal information data is stored to a mobile telephone, when reading or writing to an electronic medical record in a hospital or pharmacy, when viewing or requesting resident registration data including computerized residential or census registration information or the like, when transferring, copying, or storing various kinds of data concerning personal preferences in music or movies to one's own mobile telephone, when reading cash-amount data for a prepaid vending machine system or the like into a desired electronic device, or to go through the entrance gate of an amusement park, railway station, or the like.

In view of the above, various investigations have been carried out into the development of a mobile communication device equipped with a proximity non-contact communication function that enables proximity non-contact communication to be performed with an external proximity non-contact communication device that is a communicating party when performing proximity non-contact communication. An external proximity non-contact communication device may be a reader/writer device, a card, or the like, and a mobile communication device equipped with a proximity non-contact communication function should preferably support both a reader/writer function and a card function. In addition, such a mobile communication device tends to be reduced in size and thickness. Thus, there is large demand for a smaller built-in antenna for implementing the proximity non-contact communication function. Furthermore, since a mobile communication device contains a complex arrangement of metallic components, when proximity non-contact communication is performed by means of electromagnetic induction, a particular problem when performing proximity non-contact communication is a decrease in the induction current of the antenna due to the influence of an eddy current generated in a metallic area around the antenna, which results in a reduction in the communication region.

As a solution to this problem, an electromagnetic induction antenna has been proposed that improves communication performance by utilizing surrounding metal as shown in Patent Literature 1. FIG.1A is a plan view of an electromagnetic induction antenna of Patent Literature 1, and FIG.1B is a side view of an electromagnetic induction antenna of Patent Literature 1,

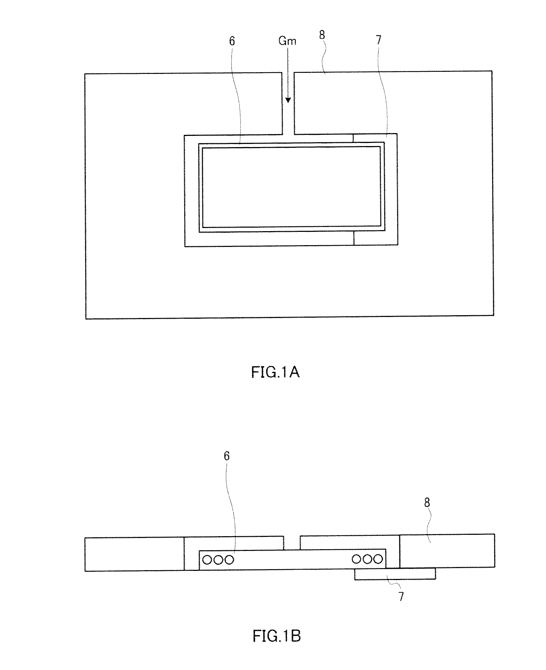

In FIG.1A and FIG.1B, an electromagnetic induction antenna includes a reader and/or writer section having antenna circuit 6 and control section 7 connected to antenna circuit 6, and surrounding metallic section 8 surrounding the periphery of antenna circuit 6. Surrounding metallic section 8 has cut-out section Gm so that a closed electrical circuit circling the periphery once is not formed in the vicinity of the peripheral part of antenna circuit 6. The electromagnetic induction antenna shown in FIG.1A and FIG.1B strengthens antenna coupling characteristics by utilizing the influence of a reverse-polarity magnetic field caused by an eddy current generated in surrounding metallic section 8 in antenna circuit 6. The electromagnetic induction antenna shown in FIG.1A and FIG.1B enables a communication region to be secured even if antenna circuit 6 is small.

In addition, an electromagnetic induction antenna has been proposed that improves communication performance by utilizing surrounding metal as shown in Patent Literature 2. FIG.2A is a perspective view of an electromagnetic induction antenna of Patent Literature 2, and FIG.2B is a side view of an electromagnetic induction antenna of Patent Literature 2. In FIG.2A and FIG.2B, disposing antenna 9 in the vicinity of metallic plate 10 enables antenna coupling characteristics to be strengthened by utilizing an induction current generated around metallic plate 10 when communication is performed by means of electromagnetic induction. Metallic plate 10 may be a battery or the like with a surface formed of a conductive material. Having metallic plate 10 and antenna 9 in close proximity enables a communication region to be secured even if antenna 9 is small, when the transfer characteristic of an induction current is high.

### Citation List

### Patent Literature

PTL 1 Patent 2006-85552
PTL 2 Patent 2007-6123

### Summary of Invention

### Technical Problem

However, a problem with Patent Literature 1 is that a battery cover for performing battery insertion and removal is disposed upon a mobile phone terminal, and it is difficult to dispose a large area of metal around the antenna.

Also, a problem with Patent Literature 2 is that it is necessary to dispose the antenna in the vicinity of a metallic plate, but it is difficult to dispose the antenna in the vicinity of the battery due to restrictions on the structural flexibility of a mobile phone terminal.

It is an object of the present invention to provide a communication terminal apparatus capable of strengthening antenna coupling characteristics with respect to an external counterpart communication device, and of securing a wide communication region.

### Solution to Problem

A communication terminal apparatus of the present invention employs a configuration having: a casing; an antenna that is disposed upon the casing and performs proximity communication by means of electromagnetic induction; an antenna metallic excitation plate that is disposed upon the casing and is electrically connected to the antenna; a battery that is installed in the casing; a battery cover that is detachably attached to the casing in order to fix the battery to the casing; and a battery cover metallic excitation plate that is disposed upon the battery cover and electrically connects the battery and the antenna metallic excitation plate while the battery cover is attached to the casing.

A communication terminal apparatus of the present invention employs a configuration having: a casing; an antenna that is disposed upon the casing and performs proximity communication by means of electromagnetic induction; a metallic excitation plate that is disposed upon the casing and is electrically connected to the antenna; a battery that is installed in the casing; and a battery cover that is detachably attached to the casing in order to fix the battery to the casing, and that is formed of a material having conductivity and is electrically connected to the metallic excitation plate while the battery cover is attached to the casing.

A communication terminal apparatus of the present invention employs a configuration having: a casing having a conductive part in at least one part; an antenna that is disposed upon the casing and that is electrically connected to the conductive part and performs proximity communication by means of electromagnetic induction; a battery that is installed in the casing; a battery cover that is detachably attached to the casing in order to fix the battery to the casing; and a metallic excitation plate that is disposed upon the battery cover and electrically connects the conductive part and the battery while the battery cover is attached to the casing.

### Advantageous Effects of Invention

The present invention is capable of strengthening antenna coupling characteristics with respect to a communicating device, and of securing a wide communication region.

### Brief Description of Drawings

FIG.1A is a plan view of an electromagnetic induction antenna of Patent Literature 1;
FIG.1B is a side view of an electromagnetic induction antenna of Patent Literature 1;

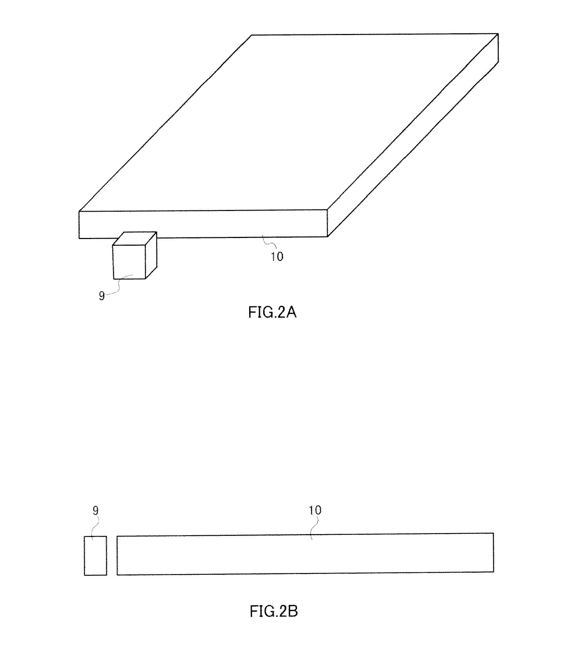

FIG.2A is a perspective view of an electromagnetic induction antenna of Patent Literature 2;
FIG.2B is a side view of an electromagnetic induction antenna of Patent Literature 2;
FIG.3A is a perspective view of an electromagnetic induction antenna according to Embodiment 1 of the present invention;
FIG.3B is a side view of a communication terminal apparatus according to Embodiment 1 of the present invention;
FIG.4A is a perspective view showing in detail where a metallic excitation plate and a metallic excitation plate come into contact according to Embodiment 1 of the present invention;
FIG.4B is a side view showing in detail where a metallic excitation plate and a metallic excitation plate come into contact according to Embodiment 1 of the present invention;
FIG.5A is a perspective view of an electromagnetic induction antenna according to Embodiment 2 of the present invention;
FIG.5B is a side view of a communication terminal apparatus according to Embodiment 2 of the present invention;
FIG.6A is a perspective view of an electromagnetic induction antenna according to Embodiment 3 of the present invention;
FIG.6B is a side view of a communication terminal apparatus according to Embodiment 3 of the present invention;
FIG.7A is a perspective view of an electromagnetic induction antenna according to Embodiment 4 of the present invention; and
FIG.7B is a side view of a communication terminal apparatus according to Embodiment 4 of the present invention.

### Description of Embodiments

Now, embodiments of the present invention will be described in detail with reference to the accompanying drawings.

### (Embodiment 1)

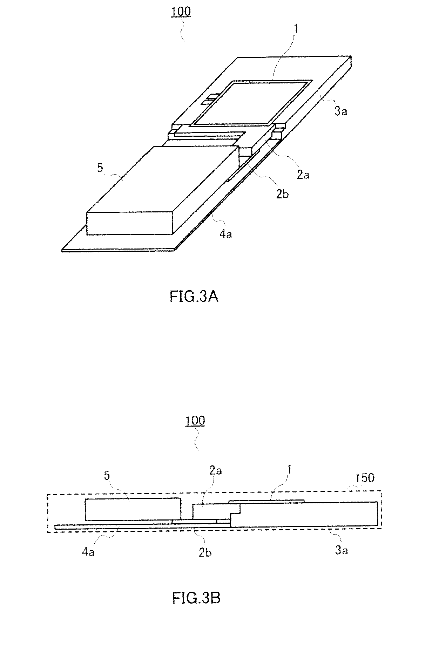

FIG.3A is a perspective view of electromagnetic induction antenna 100 according to Embodiment 1 of the present invention. FIG.3B is a side view of communication terminal apparatus 150 housing electromagnetic induction antenna 100 according to Embodiment 1 of the present invention.

Antenna 1 is a loop coil antenna, and performs proximity non-contact communication with an external counterpart communication device by means of an electromagnetic induction method. Antenna 1 is formed by printing as a conductive pattern on a flat surface of casing 3a. In addition, antenna 1 is close to or in contact with metallic excitation plate 2a and is electrically connected to metallic excitation plate 2a.

Metallic excitation plate 2a is a metallic plate that is close to at least one side of antenna 1 and is electrically connected to antenna 1, and is excited by magnetic flux generated when electromagnetic induction communication is performed. That is to say, when electromagnetic induction communication is performed with an external counterpart communication device, metallic excitation plate 2a transfers an induction current flowing around it due to magnetic flux to antenna 1. By this means, metallic excitation plate 2a can create an effect of strengthening electromagnetic coupling characteristics with respect to an external counterpart communication device.

Casing 3a is the casing of communication terminal apparatus 150, has antenna 1 and metallic excitation plate 2a disposed thereupon, and is formed of a resinous nonconductive material such as plastic. For the sake of clarity, FIG.3A and FIG.3B show only part of casing 3a.

Battery 5 supplies power to communication terminal apparatus 150, enabling communication terminal apparatus 150 to operate as a communication device. Battery 5 has external surfaces formed of a conductive material, and is electrically connected to metallic excitation plate 2b by means of an external surface.

Metallic excitation plate 2b is disposed upon battery cover 4a. When battery cover 4a is attached to and closed upon casing 3a, metallic excitation plate 2b comes into contact with metallic excitation plate 2a, and is brought into proximity to at least one side of battery 5, and is electrically connected to battery 5. Metallic excitation plate 2b is detachably attached to casing 3a together with battery cover 4a.

Battery cover 4a has metallic excitation plate 2b, and is detachably attached to casing 3a. When battery 5 is removed from casing 3a, battery cover 4a can be detached from casing 3a. Battery cover 4a is formed of a nonconductive material such as resin. When attached to communication terminal apparatus 150, battery cover 4a electrically connects metallic excitation plate 2a and metallic excitation plate 2b.

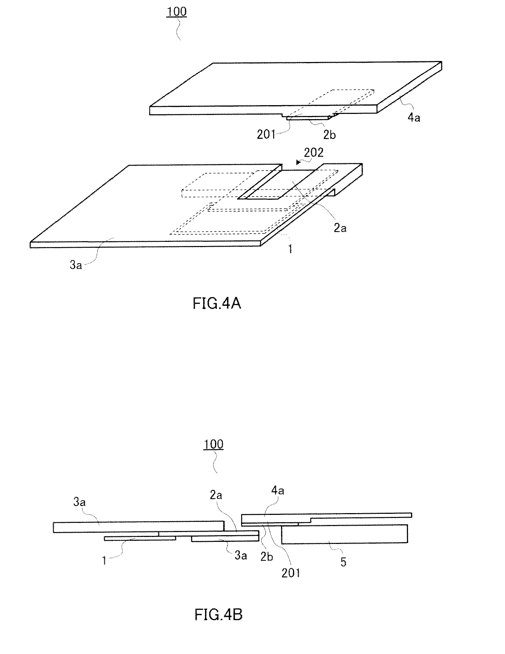

The configuration of electromagnetic induction antenna 100 will now be described in detail using FIG.4A and FIG.4B. FIG.4A is a perspective view showing in detail where metallic excitation plate 2a and metallic excitation plate 2b come into contact according to this embodiment. FIG.4B is a side view showing in detail where metallic excitation plate 2a and metallic excitation plate 2b come into contact according to this embodiment.

As shown in FIG.4A and FIG.4B, battery cover 4a has projecting part 201 with a downwardly convex shape in FIG.4B so that metallic excitation plate 2a and metallic excitation plate 2b disposed upon casing 3a are electrically connected when battery cover 4a is provided with metallic excitation plate 2b and attached to communication terminal apparatus 150. Casing 3a is provided with cut-out section 202 so that metallic excitation plate 2b disposed upon projecting part 201 of battery cover 4a can come into contact with metallic excitation plate 2a. Metallic excitation plate 2a is disposed in cut-out section 202, and is exposed on the battery cover 4a side from cut-out section 202. Therefore, when battery cover 4a is attached to casing 3a, metallic excitation plate 2a and metallic excitation plate 2b are electrically connected.

Current flows in communication using electromagnetic induction antenna 100 according to this embodiment will now be described. First, a reception operation when communication terminal apparatus 150 has a card function will be described.

When electromagnetic induction antenna 100 approaches an external counterpart communication device, communication terminal apparatus 150 generates magnetic flux as an electromagnetic wave in response to a signal transmitted from the nearby external counterpart communication device, and induction currents are generated in antenna 1, metallic excitation plate 2a, metallic excitation plate 2b, and battery 5. At this time, the induction current of battery 5 flows along an edge of battery 5. Similarly, induction currents also flow along edges in metallic excitation plate 2a and metallic excitation plate 2b. Also, a side of battery 5 close to metallic excitation plate 2b and metallic excitation plate 2b are magnetically coupled, and the induction current generated by battery 5 is transferred to metallic excitation plate 2b. Since metallic excitation plate 2b and metallic excitation plate 2a are electrically connected, an induction current flows along the outer periphery of metallic excitation plate 2b and the outer periphery of metallic excitation plate 2a. Also, a side of metallic excitation plate 2a close to antenna 1 and antenna 1 are magnetically coupled, and the induction current flowing in metallic excitation plate 2a is transferred to antenna 1. Antenna 1 receives a received signal including the sum of the induction current transferred to antenna 1 and an induction current induced by magnetic flux from the external counterpart communication device close to antenna 1. Then signal processing circuitry and so forth of communication terminal apparatus 150 (not shown) performs signal processing of the received signal received by antenna 1.

Next, a transmission operation when communication terminal apparatus 150 has a reader/writer function will be described.

Communication terminal apparatus 150 generates a transmission signal, and the generated transmission signal causes a current to flow in antenna 1 to generate magnetic flux. Due to the current flowing in antenna 1, an induction current is generated around metallic excitation plate 2b electrically connected to metallic excitation plate 2a. Furthermore, an induction current is similarly generated around battery 5 close to metallic excitation plate 2b. Due to the induction currents generated in metallic excitation plate 2a, metallic excitation plate 2b, and battery 5, electromagnetic induction occurs and magnetic flux is generated, and is transferred to an external counterpart communication device together with magnetic flux generated by antenna 1.

In this embodiment, using metallic excitation plate 2a, metallic excitation plate 2b, and battery 5 enables magnetic flux of a wide range compared with magnetic flux generated by small-area antenna 1 to be generated, and signal transfer characteristics with respect to an external counterpart communication device to be improved.

Thus, according to this embodiment, a metallic excitation plate is disposed upon a detachable battery cover, and an antenna and battery are electrically connected by means of the metallic excitation plate disposed upon the battery cover. By this means, when a communication terminal apparatus performs proximity non-contact communication by means of electromagnetic induction, the battery can be made to function as a metallic excitation plate, enabling a large metallic excitation plate area to be secured, and a wide communication region to be secured even with a small antenna.

### (Embodiment 2)

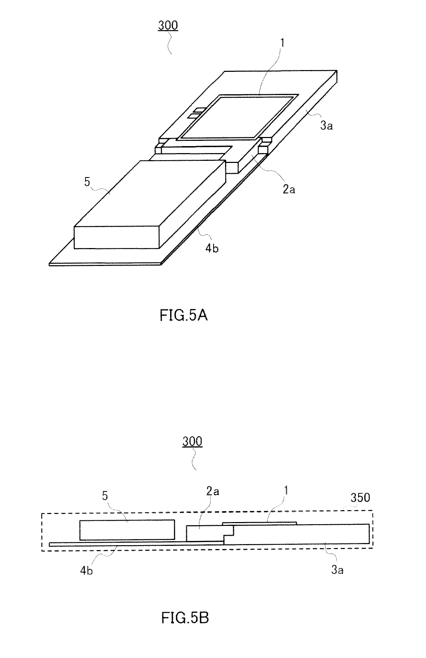

FIG.5A is a perspective view of electromagnetic induction antenna 300 according to this embodiment. FIG.5B is a side view of communication terminal apparatus 350 housing electromagnetic induction antenna 300 according to this embodiment.

As compared with electromagnetic induction antenna 100 according to Embodiment 1 shown in FIG.3A and FIG.3B, electromagnetic induction antenna 300 shown in FIG.5A and FIG.5B omits metallic excitation plate 2b and has metallic battery cover 4b instead of battery cover 4a. Configuration parts in FIG.5A and FIG.5B identical to those in FIG.3A and FIG.3B are assigned the same reference numerals as in FIG.3A and FIG.3B, and descriptions thereof are omitted here.

Metallic battery cover 4b is formed of a metallic material such as aluminum or iron. Metallic battery cover 4b has the functions and effects of both metallic excitation plate 2b and battery cover 4a in communication terminal apparatus 150 of Embodiment 1 described above. Metallic battery cover 4b comes into contact with metallic excitation plate 2a when attached to casing 3a. Furthermore, when metallic battery cover 4b is attached to casing 3a, an induction current flows around it when electromagnetic induction communication is performed, and it is electrically connected to metallic excitation plate 2a, as described in Embodiment 1 above.

Current flows in communication using electromagnetic induction antenna 300 according to this embodiment will now be described. First, a reception operation when communication terminal apparatus 350 has a card function will be described.

When electromagnetic induction antenna 300 approaches an external counterpart communication device, communication terminal apparatus 350 generates magnetic flux as an electromagnetic wave in response to a signal transmitted from the nearby external counterpart communication device, and induction currents are generated in antenna 1, metallic excitation plate 2a, and metallic battery cover 4b. At this time, the induction current from metallic battery cover 4b flows along an edge of metallic battery cover 4b. Similarly, an induction current also flows along an edge in metallic excitation plate 2a. Since metallic battery cover 4b and metallic excitation plate 2a are electrically connected, an induction current generated by metallic battery cover 4b is transferred to metallic excitation plate 2a. Also, a side of metallic excitation plate 2a close to antenna 1 and antenna 1 are magnetically coupled, and the induction current flowing in metallic excitation plate 2a is transferred to antenna 1. Antenna 1 receives a received signal including the sum of the induction current transferred to antenna 1 and an induction current induced by magnetic flux from the external counterpart communication device close to antenna 1. Then signal processing circuitry and so forth of communication terminal apparatus 350 (not shown) performs signal processing of the received signal received by antenna 1.

Next, a transmission operation when communication terminal apparatus 350 has a reader/writer function will be described.

Communication terminal apparatus 350 generates a transmission signal, and the generated transmission signal causes a current to flow in antenna 1 and generates magnetic flux. Due to the current flowing in antenna 1, an induction current is generated in metallic battery cover 4b electrically connected to metallic excitation plate 2a. Due to the induction currents generated in metallic excitation plate 2a and metallic battery cover 4b, electromagnetic induction occurs and magnetic flux is generated, and is transferred to an external counterpart communication device together with magnetic flux generated by antenna 1.

Thus, according to this embodiment, in addition to achieving the effects of Embodiment 1 described above, a battery cover of large area is used as a metallic excitation plate, making it possible to secure a wide communication region. Also, according to this embodiment, a metallic excitation plate constituting a separate component part can be made unnecessary, enabling manufacturing costs to be reduced. Furthermore, according to this embodiment, a metallic battery cover having greater strength than a resin battery cover is used, enabling a communication terminal apparatus to be made thinner.

### (Embodiment 3)

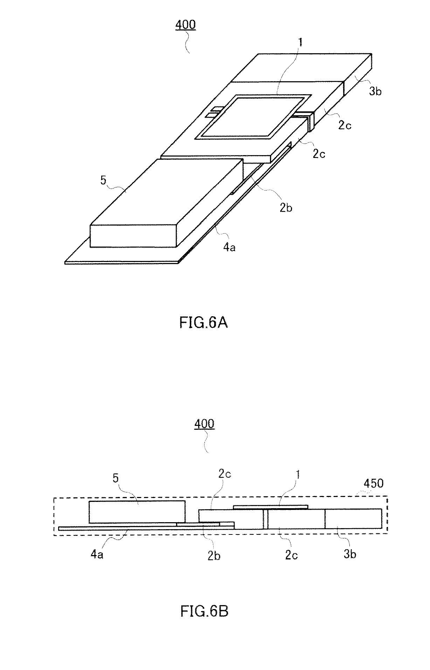

FIG.6A is a perspective view of electromagnetic induction antenna 400 according to this embodiment. FIG.6B is a side view of communication terminal apparatus 450 housing electromagnetic induction antenna 400 according to this embodiment.

As compared with electromagnetic induction antenna 100 according to Embodiment 1 shown in FIG.3A and FIG.3B, electromagnetic induction antenna 400 shown in FIG.6A and FIG.6B has metallic excitation plate 2c instead of metallic excitation plate 2a, and has casing 3b instead of casing 3a. Configuration parts in FIG.6A and FIG.6B identical to those in FIG.3A and FIG.3B are assigned the same reference codes as in FIG.3A and FIG.3B, and descriptions thereof are omitted here.

Casing 3b is the casing of communication terminal apparatus 450, has antenna 1 disposed thereupon, and is formed of a resinous nonconductive material such as plastic. Casing 3b also has metallic excitation plate 2c disposed around antenna 1. For the sake of clarity, FIG.6A and FIG.6B show only part of casing 3b.

Metallic excitation plate 2c is disposed upon casing 3b, integrally with or as a separate entity from casing 3b. Metallic excitation plate 2c is disposed close to antenna 1 and is electrically connected to antenna 1. Also, metallic excitation plate 2c is electrically connected to metallic excitation plate 2b while battery cover 4a is attached to casing 3b.

Metallic excitation plate 2b is disposed upon battery cover 4a. When battery cover 4a is attached to and closed upon casing 3b, metallic excitation plate 2b is electrically connected to metallic excitation plate 2c, and is brought into proximity to at least one side of battery 5, and is electrically connected to battery 5.

Current flows in communication using electromagnetic induction antenna 400 according to this embodiment will now be described. First, a reception operation when communication terminal apparatus 450 has a card function will be described.

When electromagnetic induction antenna 400 approaches an external counterpart communication device, communication terminal apparatus 450 generates magnetic flux as an electromagnetic wave in response to a signal transmitted from the nearby external counterpart communication device, and induction currents are generated in antenna 1, metallic excitation plate 2c, metallic excitation plate 2b, and battery 5. At this time, the battery 5 induction current flows along an edge of battery 5. Similarly, induction currents also flow along edges in metallic excitation plate 2b and metallic excitation plate 2c. Also, a side of battery 5 close to metallic excitation plate 2b and metallic excitation plate 2b are magnetically coupled, and the induction current generated by battery 5 is transferred to metallic excitation plate 2b. Since metallic excitation plate 2b and metallic excitation plate 2c are electrically connected, an induction current flows along the outer periphery of metallic excitation plate 2b and the outer periphery of metallic excitation plate 2c. Also, a side of metallic excitation plate 2c close to antenna 1 and antenna 1 are magnetically coupled, and the induction current flowing in metallic excitation plate 2c is transferred to antenna 1. Antenna 1 receives a received signal including the sum of the induction current transferred to antenna 1 and an induction current induced by magnetic flux from the external counterpart communication device close to antenna 1. Then signal processing circuitry and so forth of communication terminal apparatus 450 (not shown) performs signal processing of the received signal received by antenna 1.

Next, a transmission operation when communication terminal apparatus 450 has a reader/writer function will be described.

Communication terminal apparatus 450 generates a transmission signal, and the generated transmission signal causes a current to flow in antenna 1 and generates magnetic flux. Due to the current flowing in antenna 1, an induction current is generated around metallic excitation plate 2b in contact with metallic excitation plate 2c. Furthermore, an induction current is similarly generated around battery 5 close to metallic excitation plate 2b. Due to the induction currents generated in metallic excitation plate 2c, metallic excitation plate 2b, and battery 5, electromagnetic induction occurs and magnetic flux is generated, and is transferred to an external counterpart communication device together with magnetic flux generated by antenna 1.

A characteristic of this embodiment is that casing 3a formed of resin in above Embodiment 1 and Embodiment 2 is replaced by casing 3b formed of strong metal. Casing 3b can be made thinner than when formed of resin.

Thus, according to this embodiment, by disposing a metallic excitation plate upon a detachable battery cover, and disposing a metallic excitation plate upon a casing, an antenna and battery are electrically connected by means of the metallic excitation plates disposed upon the battery cover and casing. By this means, when a communication terminal apparatus performs proximity non-contact communication by means of electromagnetic induction, the battery can be made to function as a metallic excitation plate, enabling a large metallic excitation plate area to be secured, and a wide communication region to be secured even with a small antenna.

If other component devices (items affected by a metallic body such as a radio antenna) disposed around casing 3b are not so disposed, casing 3b may be formed of the same conductive metallic material as metallic excitation plate 2c. In this case, it is necessary for a cut-out section to be formed in casing 3b so that a closed electrical circuit circling once around antenna 1 is not formed.

### (Embodiment 4)

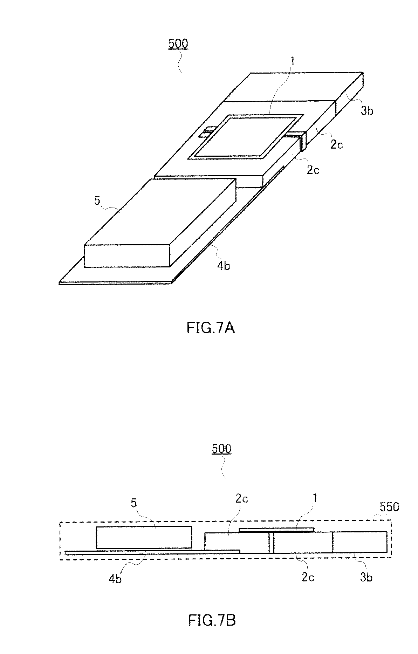

FIG.7A is a perspective view of electromagnetic induction antenna 500 according to Embodiment 4 of the present invention. FIG.7B is a side view of communication terminal apparatus 550 housing electromagnetic induction antenna 500 according to Embodiment 4 of the present invention.

Antenna 1 is of inverted L-shape, and performs proximity non-contact communication with an external counterpart communication device by means of an electromagnetic induction method. Antenna 1 is formed by printing as a conductive pattern on a flat surface of casing 3b. Antenna 1 is a loop coil antenna. Antenna 1 is close to or in contact with metallic excitation plate 2c and is electrically connected to metallic excitation plate 2c.

Metallic excitation plate 2c is disposed upon casing 3b, integrally with or as a separate entity from casing 3b. Metallic excitation plate 2c is disposed close to or in contact with antenna 1. Metallic excitation plate 2c is electrically connected to metallic battery cover 4b while metallic battery cover 4b is attached to casing 3b. Metallic excitation plate 2c is excited by magnetic flux generated when electromagnetic induction communication is performed. That is to say, when electromagnetic induction communication is performed with an external counterpart communication device, metallic excitation plate 2c transfers an induction current flowing around it due to magnetic flux to antenna 1. By this means, metallic excitation plate 2c can create an effect of strengthening electromagnetic coupling characteristics with respect to an external counterpart communication device.

Casing 3b is the casing of communication terminal apparatus 550, has antenna 1 disposed thereupon, and is formed of a resinous nonconductive material such as plastic. Casing 3b also has metallic excitation plate 2c disposed around antenna 1. For the sake of clarity, FIG.7A and FIG.7B show only part of casing 3b.

Battery 5 supplies power to communication terminal apparatus 550, enabling communication terminal apparatus 550 to operate as a communication device.

Metallic battery cover 4b is formed of a metallic material such as aluminum or iron. Metallic battery cover 4b has the functions and effects of both metallic excitation plate 2b and battery cover 4a in communication terminal apparatus 150 of Embodiment 1 described above. When attached to casing 3b, metallic battery cover 4b is electrically connected to metallic excitation plate 2c by being brought into contact with or close to metallic excitation plate 2c. Furthermore, while metallic battery cover 4b is attached to casing 3b, an induction current flows around it when electromagnetic induction communication is performed, and metallic battery cover 4b is electrically connected to metallic excitation plate 2c, as described in Embodiment 1 above.

Current flows in communication using electromagnetic induction antenna 500 according to this embodiment will now be described. First, a reception operation when communication terminal apparatus 550 has a card function will be described.

When electromagnetic induction antenna 500 approaches an external counterpart communication device, communication terminal apparatus 550 generates magnetic flux as an electromagnetic wave in response to a signal transmitted from the nearby external counterpart communication device, and induction currents are generated in antenna 1, metallic excitation plate 2c, and metallic battery cover 4b. At this time, the induction current of metallic battery cover 4b flows along an edge of metallic battery cover 4b. Since metallic battery cover 4b and metallic excitation plate 2c are electrically connected, an induction current generated by metallic battery cover 4b is transferred to metallic excitation plate 2c. Also, a side of metallic excitation plate 2c close to antenna 1 and antenna 1 are magnetically coupled, and the induction current flowing in metallic excitation plate 2c is transferred to antenna 1. Antenna 1 receives a received signal including the sum of the induction current transferred to antenna 1 and an induction current induced by magnetic flux from the external counterpart communication device close to antenna 1. Then signal processing circuitry and so forth of communication terminal apparatus 550 (not shown) performs signal processing of the received signal received by antenna 1.

Next, a transmission operation when communication terminal apparatus 550 has a reader/writer function will be described.

Communication terminal apparatus 550 generates a transmission signal, and the generated transmission signal causes a current to flow in antenna 1 to generate magnetic flux. Due to the current flowing in antenna 1, an induction current is generated in metallic battery cover 4b electrically connected to metallic excitation plate 2c. Due to the induction currents generated in metallic excitation plate 2c and metallic battery cover 4b, electromagnetic induction occurs and magnetic flux is generated, and is transferred to an external counterpart communication device together with magnetic flux generated by antenna 1.

Thus, according to this embodiment, a metallic battery cover and an antenna are electrically connected via a metallic excitation plate disposed upon a casing. By this means, when a communication terminal apparatus performs proximity non-contact communication by means of electromagnetic induction, the metallic battery cover can be made to function as a metallic excitation plate, enabling a large metallic excitation plate area to be secured, and a wide communication region to be secured even with a small antenna. Also, according to this embodiment, a battery cover of large area is used as a metallic excitation plate, making it possible to secure a wide communication region. Moreover, according to this embodiment, a metallic excitation plate constituting a separate component part can be made unnecessary, enabling manufacturing costs to be reduced. Furthermore, according to this embodiment, a metallic battery cover having greater strength than a resin battery cover is used, enabling a communication terminal apparatus to be made thinner.

The present invention is not limited to the embodiments described above in Embodiment 1 through Embodiment 4, and various variations and modifications may be possible without departing from the scope of the present invention.

The disclosure of Japanese Patent Application No.2010-718, filed on January 5, 2010, including the specification, drawings and abstract, is incorporated herein by reference in its entirety.

### Industrial Applicability

A communication terminal apparatus according to the present invention is particularly suitable for use as a communication terminal apparatus having both a reader/writer function and a card function for performing proximity non-contact communication using electromagnetic induction with a plurality of external proximity non-contact communication devices.

## Claims

1. A communication terminal apparatus comprising:
a casing;
an antenna that is disposed upon the casing and performs proximity communication by means of electromagnetic induction;
an antenna metallic excitation plate that is disposed upon the casing and is electrically connected to the antenna;
a battery that is installed in the casing;
a battery cover that is detachably attached to the casing in order to fix the battery to the casing; and
a battery cover metallic excitation plate that is disposed upon the battery cover and electrically connects the battery and the antenna metallic excitation plate while the battery cover is attached to the casing.

2. A communication terminal apparatus comprising:
a casing;
an antenna that is disposed upon the casing and performs proximity communication by means of electromagnetic induction;
a metallic excitation plate that is disposed upon the casing and is electrically connected to the antenna;
a battery that is installed in the casing; and
a battery cover that is detachably attached to the casing in order to fix the battery to the casing, and that is formed of a material having conductivity and is electrically connected to the metallic excitation plate while the battery cover is attached to the casing.

3. A communication terminal apparatus comprising:
a casing having a conductive part in at least one part;
an antenna that is disposed upon the casing and that is electrically connected to the conductive part and performs proximity communication by means of electromagnetic induction;
a battery that is installed in the casing;
a battery cover that is detachably attached to the casing in order to fix the battery to the casing; and
a metallic excitation plate that is disposed upon the battery cover and electrically connects the conductive part and the battery while the battery cover is attached to the casing.
